# FASCICULE DE BREVET EUROPEEN

(11) **EP 3 265 223 B1**
(45) Date de publication et mention de la délivrance du brevet: **12.12.2018**
(21) Numéro de dépôt: 16707742.9
(22) Date de dépôt: 02.03.2016
(51) Int. Cl.: B01J 8/12

(54) **REACTEUR A LIT INCLINE PERMETTANT DE METTRE EN OEUVRE DE FAIBLE QUANTITE DE CATALYSEUR**
REAKTOR MIT GENEIGTEM BETT ZUR VERWENDUNG EINER KLEINEN MENGE EINES KATALYSATORS
INCLINED-BED REACTOR ALLOWING THE USE OF A SMALL QUANTITY OF CATALYST

(30) Priorité: 04.03.2015 FR 1551821
(43) Date de publication de la demande: 10.01.2018
(73) Titulaire: IFP Energies nouvelles, 92500 Rueil-Malmaison (FR)
(72) Inventeur: FERNANDES, Joana, 69360 Solaize (FR); GORNAY, Julien, 38138 Les Cotes D Arey (FR); PAGOT, Alexandre, 92500 Rueil Malmaison (FR); LAMBERT, Fabian, 78400 Chatou (FR); MARTIN, Pierre-Yves, 92500 Rueil Malmaison (FR); PIERRE, Christophe, 78420 Carrieres Sur Seine (FR); SALA, François, 75009 Paris (FR)
(74) Mandataire: IFP Energies nouvelles
(86) Numéro de dépôt international: PCT/EP2016/054428
(87) Numéro de publication internationale: WO 2016/139247

(56) Documents cités:
- GB-A- 1 165 688
- GB-A- 2 155 349
- JP-A- S56 144 736
- OA-A- 3 439
- US-B1- 6 221 320

## Description

### DOMAINE DE L'INVENTION

L'invention concerne une nouvelle technologie de réacteur à lit incliné avec circulation gravitaire de catalyseur et écoulement transversal de la charge. Elle s'applique plus particulièrement au reformage catalytique des essences avec régénération continue du catalyseur. L'invention permet de mettre en oeuvre de très faibles quantités de catalyseur et donc de contrôler des temps de séjour de faible valeur, particularité qu'il n'est pas possible d'atteindre avec les technologies actuelles.

Le présent réacteur permet d'atteindre des PPH supérieures à 50 h-1 (rapport du débit de charge sur la masse de catalyseur), voire supérieure à 100 h-1.

Dans le contexte de réactions à forte endo ou exothermicité, comme par exemple les réactions de reformage des essences, le réacteur selon l'invention permet de limiter l'incidence de cette thermicité sur le profil de température à l'intérieur de la zone réactionnelle. Etant donné l'impact de la variation de température au sein du réacteur sur l'activité catalytique, il s'agit-là d'un effet essentiel sur la performance de l'unité.

La présente technologie peut être considérée comme une extension de la technologie des lits radiaux utilisés dans le reforming régénératif.

### EXAMEN DE L'ART ANTERIEUR

Dans l'art antérieur concernant les réacteurs à lit radiaux, on peut citer le brevet US 6,221,320 qui fait un récapitulatif des technologies conventionnelles.

Selon l'état de l'art, le lit catalytique dans un réacteur à lit radial est délimité par deux grilles, une grille interne et une grille externe. Plus précisément, on distingue généralement:
- Une grille interne qui délimite le collecteur central des effluents gazeux,
- Une grille externe qui délimite le volume d'alimentation de la charge à l'état gazeux.

Le fluide procédé arrive par le volume externe défini entre la virole externe et la grille externe. Il traverse ensuite le lit catalytique de manière sensiblement horizontale et perpendiculaire à la circulation du catalyseur qui est gravitaire, c'est-à-dire sensiblement verticale de haut en bas et obtenue sous le seul effet du poids du lit de catalyseur.

Le fluide procédé en écoulement radial et le catalyseur en écoulement gravitaire sont séparés par la grille interne qui a généralement une forme cylindrique de même axe sensiblement vertical que la grille externe.

Le cylindre, ou plus généralement la forme sensiblement cylindrique, défini par la grille interne sert de collecteur central pour évacuer les effluents gazeux de la zone réactionnelle comprise entre la grille externe et la grille interne et donc de forme sensiblement annulaire. Les contraintes liées à la technologie en lit radial sont multiples. En particulier, les vitesses de gaz à la traversée du lit catalytique sont limitées pour :
- éviter la cavitation en entrée du lit,
- éviter le blocage du catalyseur à sa sortie contre la grille interne,
- réduire les pertes de charge fonction de la vitesse et de l'épaisseur du lit.

Pour des raisons de distribution homogène sur toute la hauteur du lit catalytique, une grille perforée destinée à créer de la perte de charge peut être ajoutée sur le collecteur central.

Enfin, pour des raisons de construction, il est souvent nécessaire de laisser un espace suffisant entre la grille interne et la grille externe. Au final lorsqu'on cumule l'ensemble des contraintes, le volume minimal de catalyseur pouvant être enfermé dans la zone annulaire ne peut descendre en dessous d'une certaine valeur minimale.

De manière générale selon l'art antérieur, les PPH maximales sont de l'ordre de 20 h⁻¹, alors que le réacteur selon la présente invention permet d'atteindre des PPH supérieures à 50 h-1, voire supérieure à 100 h-1.

### DESCRIPTION SOMMAIRE DES FIGURES

La figure 1a représente une vue schématique d'un réacteur selon l'invention avec introduction centrale du catalyseur et évacuation latérale. L'angle du lit par rapport à l'horizontale est supérieur à l'angle de talus du catalyseur (angle minimal permettant d'assurer un écoulement gravitaire des particules de catalyseur)
La figure 1b représente une vue schématique d'un réacteur selon l'invention avec un autre angle d'inclinaison de la zone catalytique et un lit catalytique délimité par deux cônes concentriques afin de contrôler son épaisseur.
La figure 1c représente une autre variante du réacteur selon l'invention avec introduction périphérique du catalyseur et évacuation centrale. Le lit catalytique est également délimité par deux cônes concentriques afin de contrôler son épaisseur.
La figure 2a représente une vue éclatée du réacteur selon l'invention dans la variante de la figure 1c, qui permet de visualiser les jambes d'introduction périphériques (8) du catalyseur et la jambe de collecte centrale (9).
La figure 2b représente la même vue éclatée que celle de la figure 2a, le réacteur étant muni de son enveloppe extérieure (5) qui permet l'introduction du gaz réactionnel par la tubulure d'entrée (6) et la récupération des effluents par la tubulure de sortie (7). La traversée de la couche catalytique (3) se fait uniquement le long de la partie inclinée.

### DESCRIPTION SOMMAIRE DE L'INVENTION

La présente invention peut se définir comme un réacteur à écoulement gravitaire incliné du catalyseur et à écoulement transversal de la charge.

On entend par écoulement gravitaire incliné du catalyseur le fait que celui-ci s'écoule non pas verticalement comme dans les réacteurs de l'art antérieur, mais selon un certain angle d'inclinaison, la seule contrainte sur cet angle étant qu'il soit supérieur à l'angle dit « de talus », angle au-dessous duquel un écoulement du solide est impossible.

Par écoulement transversal de la charge on entend que la charge traverse la couche catalytique selon une direction sensiblement perpendiculaire à celle de l'écoulement du catalyseur.

Ledit réacteur est constitué d'une paroi conique extérieure (1) et d'une paroi conique intérieure (2), les deux parois étant sensiblement parallèles entre elles, c'est-à-dire que la distance séparant les deux parois et définissant l'épaisseur de la zone catalytique inclinée (3) ne varie pas de plus de 1 cm entre la partie supérieure et la partie inférieure de ladite zone catalytique.

La pointe du cône formé par les parois extérieure et intérieure peut être dirigée vers le haut ou vers le bas.

La zone catalytique inclinée (3) est généralement précédée d'une zone de répartition du catalyseur (4) qui est une zone cylindrique verticale de hauteur H comprise entre 200 et 1500 mm, préférentiellement entre 350 et 700 mm, le catalyseur étant introduit dans ladite zone de répartition (4) par une ou plusieurs jambes d'introduction (8) et collecté en sortie de la zone réactionnelle (4) par une ou plusieurs jambes d'évacuation (9).

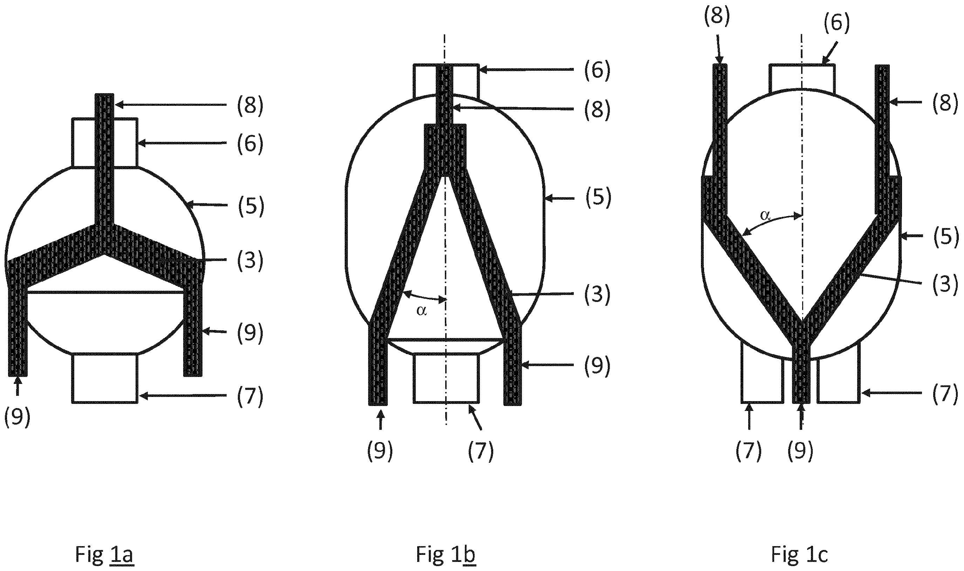

Un réacteur présentant la zone catalytique inclinée (3) et dans lequel le catalyseur est introduit par une jambe d'introduction et collecté par une pluralité de jambes d'évacuation, tel que représenté sur les figures 1a et 1b entre parfaitement dans le cadre de la présente invention. La suite de la description est faite sur un réacteur tel que représenté par la figure 1c.

L'ensemble constitué par les parois coniques extérieur (1) et intérieur (2), les jambes d'introduction (8), et la ou les jambes d'évacuation (9) étant enfermé dans une virole (5) comprenant une partie supérieure hémisphérique (10), une partie centrale cylindrique (11) et une partie inférieure hémisphérique (12). La charge est admise à l'intérieur de la virole (5) par une tubulure d'admission (6) située généralement au sommet de la partie hémisphérique supérieure (10), et les effluents réactionnels sont évacués par une tubulure inférieure (7) située généralement à la partie inférieure de la partie hémisphérique inférieure (12).
De manière générale, la distance séparant les parois coniques extérieure (1) et intérieure (2) est comprise entre 50 et 200 mm, et préférentiellement comprise entre 50 et 150 mm.

De manière générale dans le cadre de la présente invention, l'angle alpha d'inclinaison de la zone réactionnelle (3) est compris entre 0° (exclus) et 70°, et préférentiellement compris entre 10° et 50°, cet angle alpha étant repéré par rapport à la verticale.

De manière générale dans le cadre de la présente invention, le rapport hauteur sur diamètre est compris entre 1 et 30, préférentiellement compris entre 1 et 10, et de manière encore préférée entre 1 et 5, la hauteur étant définie comme la somme des hauteurs de la zone de répartition (4) et de la zone catalytique inclinée (3), et le diamètre comme celui de la zone de répartition (4).

La présente invention concerne également un procédé de reformage catalytique d'une coupe de type essence utilisant le réacteur précédemment décrit.
Selon ce procédé :
- la charge entre dans la virole (5) au moyen de la tubulure d'entrée (6) située approximativement au sommet de la partie hémisphérique supérieure (10) de la virole (5),
- la charge traverse la zone catalytique inclinée (3), et les effluents résultant de la réaction catalytique sont collectés dans la tubulure de sortie (7) située approximativement au centre de la partie hémisphérique inférieure (12) de la virole (5),
- le catalyseur est admis dans la zone de répartition verticale (4) par la ou les jambes d'introduction (8), s'écoule gravitairement à travers la zone catalytique inclinée (3), puis est évacué par la ou les jambes de sortie centrale (9).

Le procédé de reformage catalytique d'une coupe de type essence selon l'invention présente une PPH (ratio du débit massique de charge sur le poids de catalyseur) généralement supérieure à 50 h⁻¹, et préférentiellement supérieure à 100 h⁻¹.

Le procédé de reformage catalytique d'une coupe de type essence selon l'invention, peut traiter des charges ayant une teneur en paraffines qui peut aller jusqu'à 70 % poids.

Enfin le procédé de reformage catalytique d'une coupe de type essence selon l'invention peut même traiter une charge entièrement paraffinique.
Le réacteur à écoulement gravitaire incliné selon la présente invention s'incorpore préférentiellement dans une unité de reformage catalytique en tête de la série des 3 ou 4 réacteurs constituant ladite unité.
Les conditions opératoires d'une unité de reforming régénératif des essences sont typiquement :
- une température d'entrée de chaque réacteur comprise entre 480 et 550°C,
- une pression de chaque réacteur comprise entre 0,9 et 0,5 MPa (1 MPa = 10⁶ Pa). Cette pression opératoire diminue généralement lorsqu'on suit la succession des réacteurs depuis le réacteur de tête jusqu'au dernier réacteur.

### DESCRIPTION DETAILLEE DE L'INVENTION

La présente invention décrit un type de réacteur à lit catalytique incliné, destiné à mettre en oeuvre de faible quantité de catalyseur, de l'ordre de la tonne, et qui peut avantageusement constituer le premier réacteur de la série dans une unité de reformage catalytique des essences qui comprend selon l'art antérieur trois à quatre réacteurs placés en série.

Plus précisément, le réacteur selon la présente invention est un réacteur à écoulement gravitaire incliné du catalyseur et à écoulement transversal de la charge. Par écoulement gravitaire incliné du catalyseur on entend un écoulement s'effectuant selon la force de gravité et selon un certain angle alpha compris entre 0 et 70° (cet angle alpha est repéré par rapport à la verticale).

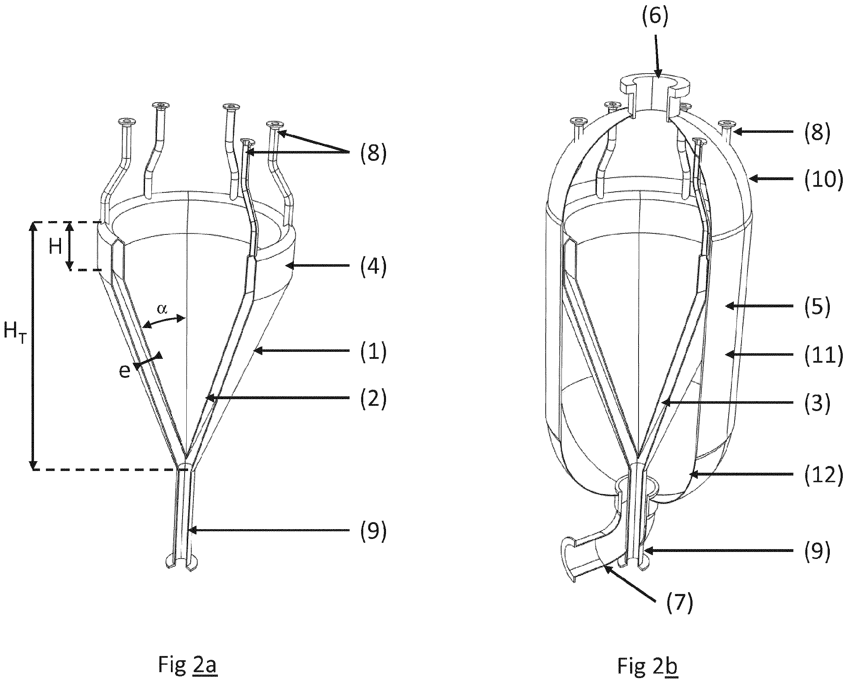

Le réacteur selon la présente invention comprend une paroi conique extérieure (1) et une paroi conique intérieure (2), les deux parois étant sensiblement parallèles entre-elle. Par sensiblement parallèle, on entend que la distance « e » (selon la figure 2a), séparant les deux parois et définissant l'épaisseur de la couche catalytique (3) ne varie pas de plus de 1 cm entre la partie supérieure et la partie inférieure du réacteur.

La pointe du cône formé par les parois extérieure (1) et intérieur (2) peut être dirigée vers le haut ou vers le bas.

De manière préférée, lorsque la pointe est dirigée vers le bas (correspondant à la figure 1c), on utilise une pluralité de jambes d'introduction (8) et une jambe d'évacuation du catalyseur (9).

De la même façon, lorsque la pointe du cône formé par les parois extérieure (1) et intérieure (2) est dirigée vers le haut (correspondant aux figures 1a et 1b), on utilise de préférence une jambe d'introduction (8) du catalyseur et une pluralité de jambes d'évacuation (9).

La suite de la description est faite selon la configuration d'une zone catalytique (3) à parois coniques dirigées vers le bas (selon la figure 1c, détaillée dans les figures 2a et 2b).

La zone catalytique inclinée (3) est généralement précédée d'une zone de répartition du catalyseur (4) qui est une zone verticale de hauteur H comprise entre 200 et 1500 mm, préférentiellement comprise entre 350 et 700 mm.

Cette zone de répartition permet au catalyseur introduit par les jambes d'introduction (8) de se répartir uniformément avant d'entrer dans la zone réactionnelle inclinée (3).

Ces jambes d'introduction (8) ont un diamètre généralement compris entre 2 et 4 pouces (soit entre 5,0 cm et 10,2 cm).

La zone catalytique inclinée (3) se termine par une tubulure d'évacuation du catalyseur (9) qu'on appelle aussi jambe centrale d'évacuation (9) dont le diamètre est généralement compris entre 2 et 6 pouces (soit entre 5,0 cm et 7,7 cm). Dans certains cas, il peut y avoir plusieurs jambes d'évacuation (9) à peu près uniformément réparties selon un cercle. Dans la suite par simplification, on parle du cas d'une seule jambe d'évacuation (9).

Dans les jambes d'introduction (8), la zone de répartition du catalyseur (4), la zone catalytique inclinée (3) et la jambe d'évacuation centrale (9), l'écoulement du catalyseur est toujours gravitaire.

L'ensemble formé par les jambes d'introduction (8), la zone d'introduction du catalyseur (4), la zone catalytique inclinée (3) et la jambe centrale d'évacuation (9) est enfermé dans une virole (5) comportant une partie supérieure hémisphérique (10), une partie centrale cylindrique (11), et une partie inférieure hémisphérique (12).

La charge est introduite au sommet de la partie hémisphérique supérieure par la tubulure d'entrée (6). La charge traverse la zone catalytique inclinée (3) sur toute la partie inclinée et les effluents réactionnels sont collectés par la tubulure de sortie (7) situé dans la partie hémisphérique inférieure de la virole (5).

L'épaisseur de la zone catalytique inclinée (3) est comprise entre 50 et 200 mm, et préférentiellement entre 50 mm et 150 mm.

L'angle d'inclinaison alpha de la zone catalytique inclinée (3) est compris entre 0 et 70°, et préférentiellement compris entre 10 et 50°.

Parmi les dispositions possibles du réacteur selon l'invention on peut avoir une introduction centrale du catalyseur et une évacuation périphérique comme cela est représenté sur les figures 1a et 1b.

L'élément invariant de ces différentes dispositions est l'existence de la zone catalytique inclinée (3).

Cela signifie qu'une disposition du réacteur telle que représentée par la figure 1a ou 1b dans laquelle le catalyseur est admis par une jambe d'introduction supérieure (8) et collecté par une pluralité de jambes de collecte inférieures (9) rentre parfaitement dans le cadre de la présente invention.

La zone de répartition du catalyseur (4) a une hauteur H qui dépend du nombre de jambes d'introduction (8), de l'angle découlement du catalyseur et du diamètre de la virole. Cette hauteur est généralement comprise entre 200 et 1500 mm, préférentiellement entre 350 et 700 mm.

Avantageusement le réacteur selon la présente invention peut être utilisé comme le réacteur de tête dans un procédé de reformage catalytique d'une coupe de type essence utilisant une série de trois ou quatre réacteurs à lit radiaux. Dans ce cas, on peut décrire l'écoulement de la charge et du catalyseur de la façon suivante :
- la charge entre dans la virole (1) au moyen de la tubulure d'entrée (6) située approximativement au sommet de la partie hémisphérique supérieure (10) de la virole (5),
- la charge traverse la zone catalytique inclinée (3), et les effluents résultant de la réaction catalytique sont collectés dans la tubulure de sortie (7) située approximativement au centre de la partie hémisphérique inférieure (12) de la virole (5),
- le catalyseur est admis dans la zone de répartition verticale (4) par les jambes d'introduction (8), s'écoule gravitairement à travers la zone catalytique inclinée (3) puis est évacué par la ou les jambes de sortie centrale (9). Ce catalyseur se présente généralement sous forme de bille sphérique dont le diamètre est compris entre 1 et 4 mm, préférentiellement entre 1,5 et 2 mm.

Dans un procédé de reformage catalytique d'une coupe de type essence utilisant le réacteur selon la présente invention, la PPH (ratio du débit de charge sur le poids de catalyseur) est supérieure à 50 h⁻¹, préférentiellement supérieure à 100 h⁻¹.

Dans un procédé de reformage catalytique d'une coupe de type essence utilisant le réacteur selon la présente invention, la charge peut avoir une teneur en paraffines qui peut aller jusqu'à 70 % poids, et même être une charge entièrement paraffinique.

### EXEMPLES

Les exemples qui suivent permettent d'illustrer le dimensionnement d'un réacteur selon l'invention destiné à être placé en tête d'une unité de reformage régénératif traitant une charge qui est une coupe essence de débit 150 t/h de charge. On entend de manière usuelle par coupe essence une coupe pétrolière de point initial d'ébullition environ 40°C et de point final environ 220°C. Toute coupe pétrolière se situant à l'intérieur de ces limites peut parfaitement convenir comme charge du réformage régénératif.
- L'exemple 1 représente un cas de référence non-conforme à l'invention,
- L'exemple 2 illustre les performances d'une unité munie d'un réacteur de tête selon l'invention avec les mêmes conditions opératoires et la même quantité totale de catalyseur que dans l'exemple 1.
- L'exemple 3 illustre les performances d'une unité ayant les mêmes caractéristiques que celle de l'exemple 2, mais traitant une charge plus sévère.

### L'exemple 1 est selon l'art antérieur.

Dans cet exemple on traite une charge d'hydrocarbures dans quatre zones réactionnelles (ou réacteurs) disposées en série. La répartition du catalyseur dans les réacteurs est la suivante: 10%/20%/30%/40% poids par rapport au poids total de catalyseur.

L'ordre dans lequel se suivent les réacteurs correspond à l'écoulement des effluents.

La quantité totale de catalyseur est de 75 tonnes. La PPH globale est de 2 h-1.

Le tableau 1 donne la composition de la charge d'hydrocarbures :
• point initial d'ébullition 100 °C, point final d'é bullition 170°C :

**Tableau 1**

| | | |
|---|---|---|
| Composition charge (% poids) | Paraffines | 50 |
| | Oléfines | 0 |
| | Naphtènes | 35 |
| | Aromatiques | 15 |
| | RON | 48,4 |
| | Débit (t/h) | 150 |

Le catalyseur mis en oeuvre dans les réacteurs comprend un support de type alumine chlorée, du platine et est promu avec de l'étain. Les particules de catalyseur sont sphériques avec un diamètre moyen de 1,8 mm.

La charge chauffée à 520°C est ainsi traitée successivement dans les quatre réacteurs avec un chauffage intermédiaire de l'effluent à 520°C avant son introduction dans la zone réactionnelle suivante.

Les conditions opératoires dans les quatre zones réactionnelles sont données dans le tableau 2 ci-dessous. Ces conditions ont été choisies pour produire un réformât récupéré en sortie du quatrième réacteur dont l'indice de RON (Research Octane Number selon la terminologie anglo-saxonne) est égal à 103,5.

**Tableau 2**

| | Réacteur 1 | Réacteur 2 | Réacteur 3 | Réacteur 4 |
|---|---|---|---|---|
| Température en entrée du réacteur (°C) | 520 | 520 | 520 | 520 |
| Pression (MPa) | 0,69 | 0,65 | 0,60 | 0,55 |
| PPH (h⁻¹) | 20,0 | 10,0 | 6,7 | 5,0 |
| Rapport molaire H₂/charge (mol/mol) | 2,5 | - | - | - |

L'exemple 2 est selon l'invention. La charge d'hydrocarbures est traitée dans cinq réacteurs disposés en série avec une répartition du catalyseur suivante: 2%/10%/20%/30%/38% poids par rapport au poids total de catalyseur.

Le petit réacteur selon la présente invention est placé en tête. C'est le réacteur 1 qui contient 2% de la masse totale de catalyseur de l'unité.

La quantité totale de catalyseur est toujours de 75 tonnes pour traiter un débit de charge d'hydrocarbures de 150 t/h (PPH globale= 2 h-1).

Comme dans l'exemple 1, la charge et l'effluent d'une zone réactionnelle sont chauffées à 520°C avant d'entrer dans la zone réactionnelle sui vante.

Les conditions opératoires dans les zones réactionnelles des réacteurs sont regroupées dans le tableau 3 suivant:

**Tableau 3**

| | Réacteur 1 | Réacteur 2 | Réacteur 3 | Réacteur 4 | Réacteur 5 |
|---|---|---|---|---|---|
| Température en entrée du réacteur (°C) | 520 | 520 | 520 | 520 | 520 |
| Pression (MPa) | 0,74 | 0,69 | 0,65 | 0,60 | 0,55 |
| PPH (h⁻¹) | 100,0 | 20,0 | 10,0 | 6,7 | 5,26 |
| Rapport molaire H₂/charge (mol/mol) | 2,5 | - | - | - | - |

Le dimensionnement du premier réacteur est réalisé conformément aux figures 2a et 2b avec les caractéristiques géométriques décrites dans le tableau 4 ci-dessous.

**Tableau 4**

| | | |
|---|---|---|
| PPH | (h-1) | 100 |
| Volume catalyseur | (m3) | 1,74 |
| Angle de cône alpha (/verticale) | (°) | 20 |
| Epaisseur du lit catalytique | (mm) | 150 |
| Diamètre virole | (m) | 2,43 |
| Hauteur zone de répartition du catalyseur (H) | (m) | 0,5 |
| Hauteur totale catalyseur H_{T} | (m) | 3,4 |
| Hauteur totale du réacteur | (m) | 5,2 |
| Perte de charge des zones réactionnelles annulaires | (Pa) | 600 |

En mettant en oeuvre le petit réacteur de tête selon l'invention, on limite la chute de température dans la première zone réactionnelle, mais également dans les autres zones 2, 3, 4 et 5. En effet, la très forte endo thermicité liée aux premières réactions est maitrisée plus facilement par la mise en oeuvre d'une très faible quantité de catalyseur.
Etant donné que l'activité du catalyseur est fonction de la température moyenne dans le lit catalytique, en limitant la chute de température au sein du réacteur, on améliore le rendement en composés en aromatiques, comme indiqué dans le tableau 5 ci-dessous.

**Tableau 5**

| | Exemple 1 (non-conforme à l'invention) | Exemple 2 (selon l'invention) |
|---|---|---|
| PPH globale (h⁻¹) | 2 | 2 |
| PPH (h-1) réacteur de tête | 20 | 100 |
| Rendement en réformât (C5+) (% poids) | 91,2 | 90,4 |
| | | |
| Rendement en aromatiques (% poids) | 74,6 | 75,8 |
| RON du réformât | 103,5 | 104,7 |

Cette augmentation de température dans les lits catalytiques impacte grandement l'activité du catalyseur. Pour une même quantité de catalyseur comme illustré ci-dessous, le gain en production d'aromatique permet une amélioration en RON de 1,2 point.

L'exemple 3 permet d'illustrer l'apport de l'invention vis-à-vis de la sévérité de charge.
Une charge est d'autant plus sévère que sa teneur en paraffines est élevée.
Selon l'approche de l'art antérieur, il est nécessaire d'augmenter la quantité de catalyseur ou la température en entrée réacteur pour maintenir le RON du reformat.

L'exemple 3 traite une charge décrite dans le tableau 6 ci-dessous, charge beaucoup plus sévère que celle de l'exemple 1, puisque très nettement paraffinique.

**Tableau 6**

| | | |
|---|---|---|
| Composition charge (% poids) | Paraffines | 63 |
| | Oléfines | 0 |
| | Naphtènes | 22 |
| | Aromatiques | 15 |
| | RON | 40,1 |
| | Débit (t/h) | 150 |

Avec les mêmes conditions opératoires que celles décrites dans les tableaux 3 et 4, le RON du réformât est maintenu à 103,5 malgré une augmentation de 13 % pds de la quantité de paraffines dans la charge, comme montré dans le tableau 7 ci-dessous. PNA correspond au pourcentage de paraffines (P), naphtènes (N) et aromatiques (A).

**Tableau 7**

| | Exemple 1 (non-conforme à l'invention) | Exemple 3 (selon l'invention) |
|---|---|---|
| PNA de la charge (% pds) | 50 / 35 / 15 | 63 / 22 / 15 |
| PPH globale (h⁻¹) | 2 | 2 |
| PPH (h-1) du réacteur de tête | 20 | 100 |
| RON du réformât | 103,5 | 103,5 |

Le réacteur selon la présente invention placé en tête de la série des réacteurs d'une unité de reformage catalytique des essences permet donc d'élargir le traitement des coupes essences à des coupes très paraffiniques, ce qui est une amélioration très importante dans un contexte marqué par la limitation drastique de la teneur en aromatiques dans les essences.

## Revendications

1. Réacteur à écoulement gravitaire incliné du catalyseur et à écoulement transversal de la charge, ledit réacteur étant constitué d'une paroi conique extérieure (1) et d'une paroi conique intérieure (2), sensiblement parallèles entre elles, les deux parois coniques étant inclinées d'un angle alpha par rapport à la verticale, la pointe du cône pouvant être dirigée vers le haut ou vers le bas, et le catalyseur étant introduit dans la zone de répartition (4) par une ou plusieurs jambes d'introduction (8) et collecté en sortie de la zone réactionnelle (4) par une ou plusieurs jambes d'évacuation (9), l'ensemble constitué par les parois coniques extérieure (1) et intérieure (2), les jambes d'introduction (8), et les jambes d'évacuation (9) étant enfermé dans une virole (5) comprenant une partie supérieure hémisphérique (10), une partie centrale cylindrique (11), et une partie inférieure hémisphérique (12), et la charge étant admise à l'intérieur de la virole (5) par une tubulure d'admission (6) située au sommet de la partie hémisphérique supérieure (10), et les effluents réactionnels étant évacués par une tubulure inférieure (7) située à la partie inférieure de la partie hémisphérique inférieure (12).

2. Réacteur à écoulement gravitaire incliné selon la revendication 1, dans lequel la distance séparant les parois coniques extérieure (1) et intérieure (2) est comprise entre 50 et 200 mm, et préférentiellement comprise entre 50 et 150 mm.

3. Réacteur à écoulement gravitaire incliné selon la revendication 1, dans lequel l'angle alpha d'inclinaison de la zone réactionnelle (3) est compris entre 0° (exclus) et 70°, et préférentiellement compris entre 10° et 50° (cet angle alpha est repéré par rapport à la verticale).

4. Réacteur à écoulement gravitaire incliné selon la revendication 1, dans lequel le rapport hauteur sur diamètre est compris entre 1 et 30, préférentiellement compris entre 1 et 10, et de manière encore préférée compris entre 1 et 5, la hauteur étant définie comme la somme des hauteurs de la zone de répartition (4) et de la zone catalytique inclinée (3), et le diamètre comme celui de la zone de répartition (4).

5. Réacteur à écoulement gravitaire incliné selon la revendication 1, dans lequel la distance séparant les deux parois coniques définissant l'épaisseur de la zone catalytique inclinée (3) ne varie pas de plus de 1 cm entre la partie supérieure et la partie inférieure de ladite zone catalytique.

6. Réacteur à écoulement gravitaire incliné selon la revendication 1, dans lequel la zone de répartition du catalyseur (4) est une zone cylindrique verticale de hauteur H comprise entre 200 et 1500 mm, préférentiellement comprise entre 350 et 700 mm.

7. Procédé de reformage catalytique d'une coupe de type essence utilisant le réacteur selon l'une des revendications 1 à 6, dans lequel :
- la charge entre dans la virole (1) au moyen de la tubulure d'entrée (6) située approximativement au sommet de la partie hémisphérique supérieure de la virole (5),
- la charge traverse la zone catalytique inclinée (3), et les effluents résultant de la réaction catalytique sont collectés dans la tubulure de sortie (7) située approximativement au centre de la partie hémisphérique inférieure de la virole (5),
- le catalyseur est admis dans la zone de répartition verticale (4) par les jambes d'introduction (8), s'écoule gravitairement à travers la zone catalytique inclinée (3), puis est évacué par la ou les jambes de sortie centrale (9).

8. Procédé de reformage catalytique d'une coupe de type essence selon la revendication 7, dans lequel la PPH (ratio du débit de charge sur le poids de catalyseur) est supérieure à 50 h⁻¹, préférentiellement supérieure à 100 h⁻¹.

9. Procédé de reformage catalytique d'une coupe de type essence selon les revendications 7 et 8, dans lequel la charge a une teneur en paraffines allant jusqu'à 70 % poids.

10. Procédé de reformage catalytique d'une coupe de type essence selon les revendications 7 et 8, dans lequel la charge est entièrement paraffinique.

11. Procédé de reformage catalytique d'une coupe de type essence selon la revendication 7, dans lequel le réacteur selon la revendication 1 est placé en tête de la série des réacteurs constituant le dit procédé.

12. Procédé de reformage catalytique d'une coupe essence selon la revendication 7, dans lequel les conditions opératoires sont :
- température d'entrée de chaque réacteur comprise entre 480 et 550°C,
- pression de chaque réacteur comprise entre 0,9 et 0,5 MPa (1 MPa = 10⁶ Pa).

## Patentansprüche

1. Reaktor mit geneigtem Katalysatorfluss durch Schwerkraft und mit Querströmung der Charge, wobei der Reaktor aus einer konischen Außenwand (1) und einer konischen Innenwand (2) besteht, die im Wesentlichen parallel zueinander sind, wobei die beiden konischen Wände unter einem Winkel alpha in Bezug auf die Vertikale geneigt sind, wobei die Spitze des Kegels nach oben oder nach unten gerichtet sein kann, und der Katalysator in die Verteilungszone (4) durch ein oder mehrere Einführbeine (8) eingebracht wird und am Ausgang der Reaktionszone (4) durch ein oder mehrere Abfuhrbeine (9) gesammelt wird, wobei die Einheit aus konischen Außen- (1) und Innenwänden (2) besteht, wobei die Einführbeine (8) und die Abfuhrbeine (9) in einem Mantel (5) eingeschlossen sind, der einen oberen hemisphärischen Teil (10), einen zentralen zylindrischen Teil (11) und einen unteren hemisphärischen Teil (12) umfasst, und die Charge im Inneren des Mantels (5) durch ein Zufuhrrohr (6) aufgenommen wird, das am Scheitel des oberen hemisphärischen Teils (10) angeordnet ist, und die Reaktionsabflüsse durch ein unteres Rohr (7) abgeführt werden, das an dem unteren Teil des unteren hemisphärischen Teils (12) angeordnet ist.

2. Reaktor mit geneigtem Gravitationsfluss nach Anspruch 1, wobei die Distanz, welche die konische Außen- (1) und Innenwand (2) trennt, zwischen 50 und 200 mm, und vorzugsweise zwischen 50 und 150 mm, beträgt.

3. Reaktor mit geneigtem Gravitationsfluss nach Anspruch 1, wobei der Neigungswinkel alpha der Reaktionszone (3) zwischen 0° (ausschließlich) und 70°, und vorzugsweise zwischen 10° und 50°, beträgt (wobei dieser Winkel alpha in Bezug auf die Vertikale gesehen ist) .

4. Reaktor mit geneigtem Gravitationsfluss nach Anspruch 1, wobei das Verhältnis der Höhe zum Durchmesser zwischen 1 und 30, vorzugsweise zwischen 1 und 10, und noch bevorzugter zwischen 1 und 5, beträgt, wobei die Höhe als die Summe der Höhen der Verteilungszone (4) und der geneigten katalytischen Zone (3) definiert ist, und der Durchmesser als jener der Verteilungszone (4) .

5. Reaktor mit geneigtem Gravitationsfluss nach Anspruch 1, wobei die Distanz, welche die beiden konischen Wände trennt, welche die Dicke der geneigten katalytischen Zone (3) definieren, nicht um mehr als 1 cm zwischen dem oberen Teil und dem unteren Teil der katalytischen Zone variiert.

6. Reaktor mit geneigtem Gravitationsfluss nach Anspruch 1, wobei die Verteilungszone (4) des Katalysators eine vertikale zylindrische Zone ist mit einer Höhe H zwischen 200 und 1500 mm, vorzugsweise zwischen 350 und 700 mm.

7. Verfahren zur katalytischen Reformierung eines Benzinschnitts unter Verwendung des Reaktors nach einem der Ansprüche 1 bis 6, wobei:
- die Charge in den Mantel (1) durch das Einlassrohr (6) eintritt, das ungefähr am Scheitel des oberen hemisphärischen Teils des Mantels (5) angeordnet ist,
- die Charge die geneigte katalytische Zone (3) durchquert, und die aus der katalytischen Reaktion erhaltenen Abflüsse in dem Auslassrohr (7) gesammelt werden, das ungefähr im Zentrum des unteren hemisphärischen Teils des Mantels (5) angeordnet ist,
- der Katalysator in die vertikale Verteilungszone (4) durch die Einführbeine (8) aufgenommen wird, durch Schwerkraft quer durch die geneigte katalytische Zone (3) strömt, dann durch das oder die Beine des zentralen Auslasses (9) abgeführt wird.

8. Verfahren zur katalytischen Reformierung eines Benzinschnitts nach Anspruch 7, wobei das PPH (Verhältnis des Durchsatzes der Charge zum Gewicht des Katalysators) größer ist als 50 h⁻¹, vorzugsweise größer als 100 h⁻¹.

9. Verfahren zur katalytischen Reformierung eines Benzinschnitts nach den Ansprüchen 7 und 8, wobei die Charge einen Gehalt an Paraffinen von bis zu 70 Gew.-% aufweist.

10. Verfahren zur katalytischen Reformierung eines Benzinschnitts nach den Ansprüchen 7 und 8, wobei die Charge im Wesentlichen paraffinisch ist.

11. Verfahren zur katalytischen Reformierung eines Benzinschnitts nach Anspruch 7, wobei der Reaktor nach Anspruch 1 am Kopf der Serie der Reaktoren platziert ist, die das Verfahren darstellen.

12. Verfahren zur katalytischen Reformierung eines Benzinschnitts nach Anspruch 7, wobei die Betriebsbedingungen sind:
- Eintrittstemperatur in jeden Reaktor zwischen 480 und 550°C,
- Druck jedes Reaktors zwischen 0,9 und 0,5 MPa (1 MPa = 10⁶ Pa) .

## Claims

1. A reactor with an inclined gravitational flow of catalyst and with a transverse flow of feed, said reactor being constituted by an outer conical wall (1) and an inner conical wall (2) substantially parallel to each other, the two conical walls being inclined at an angle alpha with respect to the vertical, the point of the cone possibly being directed towards the top or towards the bottom, and the catalyst being introduced into the distribution zone (4) via one or more introduction legs (8) and collected from the outlet of the reaction zone (4) via one or more evacuation legs (9), the assembly constituted by the outer (1) and inner (2) conical walls, the introduction legs (8), and the evacuation legs (9) is enclosed in a shell (5) comprising an upper hemispherical portion (10), a central cylindrical portion (11) and a lower hemispherical portion (12) and the feed being admitted into the interior of the shell (5) via an admission pipe (6) located at the top of the upper hemispherical portion (10), and the reaction effluents being evacuated via a lower pipe (7) located at the lower portion of the lower hemispherical portion (12).

2. The inclined gravitational flow reactor according to claim 1, in which the distance separating the outer (1) and inner (2) conical walls is in the range 50 to 200 mm, preferably in the range 50 to 150 mm.

3. The inclined gravitational flow reactor according to claim 1, in which the angle alpha of inclination of the reaction zone (3) is in the range 0° (excluded) to 70°, and preferably in the range 10° to 50° (this angle alpha being with respect to the vertical).

4. The inclined gravitational flow reactor according to claim 1, in which the height-to-diameter ratio is in the range 1 to 30, preferably in the range 1 to 10, and more preferably in the range 1 to 5, the height being defined as the sum of the heights of the distribution zone (4) and the inclined catalytic zone (3), and the diameter as that of the distribution zone (4).

5. The inclined gravitational flow reactor according to claim 1, in which the distance separating the two conical walls defining the thickness of the inclined catalytic zone (3) does not vary by more than 1 cm between the upper portion and the lower portion of said catalytic zone.

6. The inclined gravitational flow reactor according to claim 1, in which the catalyst distribution zone (4) is a vertical cylindrical zone with height H in the range 200 to 1500 mm, preferably in the range 350 to 700 mm.

7. A process for the catalytic reforming of a gasoline type cut using the reactor according to one of claims 1 to 6, in which:
• the feed enters the shell (5) by means of the inlet pipe (6) located approximately at the top of the upper hemispherical portion of the shell (5),
• the feed passes through the inclined catalytic zone (3) and the effluents resulting from the catalytic reaction are collected in the outlet pipe (7) located approximately at the centre of the lower hemispherical portion of the shell (5),
• the catalyst is admitted into the vertical distribution zone (4) via the introduction legs (8), flows under gravity through the inclined catalytic zone (3) and is then evacuated via the central outlet leg or legs (9).

8. The process for the catalytic reforming of a gasoline type cut according to claim 7, in which the HSV (ratio of the mass flow rate of feed to the weight of catalyst) is more than 50 h⁻¹, preferably more than 100 h⁻¹.

9. The process for the catalytic reforming of a gasoline type cut according to claim 7 or claim 8, in which the feed has a paraffins content of up to 70% by weight.

10. The process for the catalytic reforming of a gasoline type cut according to claim 7 or claim 8, in which the feed is entirely paraffinic.

11. The process for the catalytic reforming of a gasoline type cut according to claim 7, in which the reactor according to claim 1 is placed at the head of the series of reactors constituting said process.

12. The process for the catalytic reforming of a gasoline type cut according to claim 7, in which the operating conditions are as follows:
• an inlet temperature for each reactor in the range 480°C to 550°C,
• a pressure for each reactor in the range 0.9 to 0.5 MPa (1 MPa = 10⁶ Pa).
